# EUROPÄISCHE PATENTSCHRIFT

(11) **EP 2 928 646 B1**
(45) Veröffentlichungstag und Bekanntmachung des Hinweises auf die Patenterteilung: **07.06.2017**
(21) Anmeldenummer: 13802881.6
(22) Anmeldetag: 05.12.2013
(51) Int. Cl.: B24D 15/00

(54) **OPTISCH VARIABLES SICHERHEITSELEMENT MIT OPTISCH VARIABLEM FARBSCHICHTAUFBAU**
OPTICALLY VARIABLE SECURITY ELEMENT WITH OPTICALLY VARIABLE COLOURED LAYER STRUCTURE
ÉLÉMENT DE SÉCURITÉ VISUELLEMENT VARIABLE, DOTÉ D'UNE STRUCTURE À COUCHES COLORÉES VISUELLEMENT VARIABLE

(30) Priorität: 07.12.2012 DE 102012024082; 25.07.2013 DE 102013012340
(43) Veröffentlichungstag der Anmeldung: 14.10.2015
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE); SCHIFFMANN, Peter, 81673 München (DE); ANDERS, Jörg, 85570 Ottenhofen (DE); PREIDT, Adolf, 82140 Olching (DE)
(86) Internationale Anmeldenummer: PCT/EP2013/003684
(87) Internationale Veröffentlichungsnummer: WO 2014/086495

(56) Entgegenhaltungen:
- WO-A1-2010/142391
- DE-A1-102009 023 982

## Beschreibung

Die Erfindung betrifft ein optisch variables Sicherheitselement zur Absicherung von Wertgegenständen mit einem Substrat, einer auf dem Substrat angeordneten dunklen Untergrundschicht und einem über der Untergrundschicht angeordneten optisch variablen Farbschichtaufbau, der eine erste Effektschicht und eine zweite Effektschicht umfasst. Die Erfindung betrifft ferner ein Verfahren zur Herstellung eines derartigen Sicherheitselements, eine Sicherheitsanordnung mit einem solchen Sicherheitselement und einen entsprechend ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch magnetisch ausrichtbare Effektpigmente eingesetzt, die magnetisch in Form eines darzustellenden Motivs ausgerichtet werden können.

Aus der Druckschrift WO 2009/074284 A2 ist eine Kombination von ersten optisch variablen Effektpigmenten und zweiten durch ein äußeres Magnetfeld reversibel ausrichtbaren Effektpigmenten bekannt. Der optisch variable Effekt der ersten Effektpigmente tritt dabei mit den interaktiv auslösbaren, dreidimensional anmutenden Erscheinungsbildern in Wechselwirkung, die durch die magnetisch ausrichtbaren zweiten Effektpigmente erzeugt werden. WO 2010/142391 A1 zeigt den Oberbegriff von Anspruch 1.

Ausgehend davon liegt der Erfindung die Aufgabe zugrunde, optisch variable Sicherheitselemente mit magnetisch reversibel ausrichtbaren Magnetpigmenten weiter zu verbessern und insbesondere ein Sicherheitselement mit attraktivem visuellem Erscheinungsbild und hoher Fälschungssicherheit anzugeben.

Diese Aufgabe wird durch das Sicherheitselement mit den Merkmalen des Hauptanspruchs gelöst. Ein Verfahren zur Herstellung eines derartigen Sicherheitselements, eine Sicherheitsanordnung mit einem solchen Sicherheitselement und ein entsprechend ausgestatteter Datenträger sind in den nebengeordneten Ansprüchen angegeben. Weiterbildungen der Erfindung sind Gegenstand der abhängigen Ansprüche.

Gemäß der Erfindung ist bei einem gattungsgemäßen optisch variablen Sicherheitselement vorgesehen, dass die erste Effektschicht auf der Untergrundschicht angeordnet ist und durch ein äußeres Magnetfeld reversibel ausrichtbare Effektpigmente enthält, und dass die zweite Effektschicht eine optisch variable Schicht darstellt, die auf und/oder neben der ersten Effektschicht angeordnet ist.

Im Rahmen der vorliegenden Erfindung wird unter der Formulierung "optisch variabel" oder "optische Variabilität" die Änderung einer von einem Betrachter erfassbaren optischen Eigenschaft eines von dem Betrachter betrachteten erfindungsgemäßen Sicherheitselements oder Datenträgers mit einem erfindungsgemäßen Farbschichtaufbau verstanden. Zu den variablen optischen Eigenschaften werden in Übereinstimmung mit den Erläuterungen auf der Internetseite "http://de.wikipedia.org/wiki/Farbs%C3%A4ttigung" insbesondere die vom Menschen als grundlegend empfundenen Eigenschaften einer Farbe, nämlich Farbton, Helligkeit und Farbsättigung verstanden. Die Qualität der Farbwirkung auf einen Betrachter eines erfindungsgemäßen Sicherheitselements kann ferner durch Wertigkeiten, wie Buntheit, Farbigkeit (Farbintensität), Chromatizität, Farbtiefe, Brillanz und Graustich, beschrieben werden. Ferner können die erfindungsgemäßen Sicherheitselemente, Datenträger oder Farbschichtaufbauten auch durch weitere optische Eigenschaften charakterisiert werden, z. B. durch ihr Reflexionsvermögen.

Ändert sich bei Betrachtung eines erfindungsgemäßen Sicherheitselements oder Datenträgers mit einem erfindungsgemäßen Farbschichtaufbau aus den nachstehend beschriebenen Gründen z.B. eine der vorstehend genannten optischen Eigenschaften, insbesondere der Farbton, die Helligkeit, die Farbsättigung oder das Reflexionsvermögen des betrachteten Sicherheitselements, Datenträgers oder des Farbschichtaufbaus, wird im Rahmen der vorliegenden Erfindung von einem optisch variablen Sicherheitselement, Datenträger oder einem optisch variablen Farbschichtaufbau gesprochen.

Ein erfindungsgemäßes Sicherheitselement oder ein erfindungsgemäßer Datenträger kann nun aus verschiedenen Gründen veränderte optische Eigenschaften gegenüber dem Betrachter aufweisen. Beispielsweise können sich die optischen Eigenschaften des betrachteten Sicherheitselements/Datenträgers beim Kippen des Sicherheitselements/Datenträgers verändern, weil eine oder mehrere der vorstehend genannten optischen Eigenschaft unter verschiedenen Betrachtungswinkeln verschieden sind. D.h., der Betrachter nimmt bei Betrachtung eines erfindungsgemäßen Sicherheitselements/Datenträgers unter unterschiedlichen Betrachtungswinkeln unterschiedliche Bildeindrücke wahr. Ein für den Betrachter relativ eindeutig wahrnehmbarer Kippeffekt und damit für den Fälschungsschutz der erfindungsgemäßen Sicherheitselemente oder Datenträger besonders wertvoller Kippeffekt ist ein sogenannter Farbkippeffekt, also die Veränderung des Farbtons des betrachteten Sicherheitselements bei Änderung der Betrachtungsrichtung. Wie bereits erwähnt, umfasst der Begriff "optisch variabel" erfindungsgemäß aber jede Änderung einer optischen Eigenschaft des betrachteten Sicherheitselements/Datenträgers, also z.B. auch die Änderung der Helligkeit, der Farbsättigung oder des Reflexionsvermögens beim Kippen des Sicherheitselements oder Datenträgers.

Der optisch variable Effekt eines erfindungsgemäßen Sicherheitselements/ Datenträgers kann unterschiedliche Ursachen haben. Zum einen können sich die vom Betrachter erfassbaren optischen Eigenschaften des erfindungsgemäßen Sicherheitselements/Datenträgers bzw. des erfindungsgemäßen Farbschichtaufbaus durch die erfindungsgemäß eingesetzten magnetischen Pigmente bzw. die bevorzugt eingesetzten optisch variablen Pigmente, wie oben ausgeführt, beim Kippen des Sicherheitselements/Datenträgers ändern. D.h., die optische Variabilität des Sicherheitselements/Datenträgers ist auf die Änderung des Betrachtungswinkels bezüglich der optisch variablen oder magnetisch ausrichtbaren Pigmente zurückzuführen. Andererseits kann der Betrachter bei feststehendem Betrachtungswinkel bezüglich des Sicherheitselements/Datenträgers zumindest in den Bereichen einen veränderten Bildeindruck des Sicherheitselements/Datenträgers wahrnehmen, in denen die Orientierung der magnetisch ausrichtbaren Pigmente durch Anlegen eines Magnetfeldes geändert wird. Mit anderen Worten: es kommt für das erfindungsgemäße Sicherheitselement nicht darauf an, ob sich der Bildeindruck für den Betrachter durch Kippen des Sicherheitselements/Datenträgers und der in dem Farbschichtaufbau enthaltenen Pigmente ändert, oder ob sich der Bildeindruck durch Änderung der Orientierung der magnetisch ausrichtbaren Pigmente bei an sich feststehender Betrachtungsrichtung ändert.

Ferner ist noch anzumerken, dass der Begriff "optisch variabel" auch auf erfindungsgemäße Sicherheitselemente, Datenträger, Farbschichtaufbauten oder Pigmente zutrifft, bei denen die optische Variabilität nicht durch Kippen des Sicherheitselements oder Änderung der Orientierung der Pigmente, sondern durch Veränderung der Beleuchtungsrichtung einer eingesetzten Lichtquelle hervorgerufen wird.

Des Weiteren ist noch anzumerken, dass der vorstehend beschriebene optisch variable Effekt für einen Betrachter wahrnehmbar, also zumindest im sichtbaren Wellenlängenbereich von ca. 380 nm bis 780 nm vorhanden sein muss. Selbstverständlich kann der optisch variable Effekt darüber hinaus auch im Wellenlängenbereich von weniger als 380 nm oder mehr als 780 nm auftreten.

Im Rahmen der vorliegenden Erfindung wird unter der Formulierung "Effektschicht" eine Schicht verstanden, die einen bestimmten Effekt zeigt. Der Effekt stellt einen optisch variablen Effekt im Sinne der obigen Definition von "optisch variabel" oder "optische Variabilität" dar. Erfindungsgemäß enthält die erste Effektschicht durch ein äußeres Magnetfeld reversibel ausrichtbare Effektpigmente. Demnach führt die Veränderung der Position/Ausrichtung der Effektpigmente in einem äußeren Magnetfeld zu einer Änderung der vom Betrachter erfassbaren optischen Eigenschaft der ersten Effektschicht bzw. des Sicherheitselements. Die zweite Effektschicht stellt erfindungsgemäß eine optisch variable Schicht dar, wobei der optisch variable Effekt bevorzugt durch optisch variable Effektpigmente hervorgerufen wird.

Im Rahmen der vorliegenden Beschreibung bedeutet "transluzent" dabei durchscheinend im Sinn einer gewissen oder vollständigen Lichtdurchlässigkeit und schließt somit auch Transparenz mit ein. Eine transluzente Schicht erlaubt es, die hi ter bzw. unter ihr befindlichen Objekte wahrzunehmen, auch wenn durch die transluzente Schicht die Helligkeit der Objekte reduziert und/ oder die Farbe der Objekte verändert sein kann. Ist die Lichtdurchlässigkeit einer Schicht dagegen so gering, dass die hinter bzw. unter ihr befindlichen Objekte nicht mehr erkennbar sind, ist sie nicht mehr transluzent, sondern wird als opak oder deckend bezeichnet.

Als Substrat des Sicherheitselements kommen insbesondere Trägermaterialien aus Baumwollfasern, aus Polymeren oder Substrate mit einem hybriden Aufbau in Frage. Das Substrat kann durch einen Datenträger, beispielsweise eine Banknote, insbesondere eine Papierbanknote, vorzugsweise eine Baumwoll-Papierbanknote, eine Polymerbanknote oder eine Folien-Papier-Verbundbanknote gebildet sein. Letztere weist vorzugsweise eine Schichtenfolge Folie/Papier/Folie oder Papier/Folie/Papier auf. Der Datenträger kann auch eine Ausweiskarte darstellen, insbesondere eine Kreditkarte, eine Bankkarte, eine Barzahlungskarte, eine Berechtigungskarte, einen Personalausweis, einen Pass oder eine Pass-Personalisierungsseite.

Die Untergrundschicht kann auf dem Substrat vollflächig oder nicht vollflächig vorliegen und beispielsweise in Form eines Motivs ausgebildet sein. Sie enthält vorzugsweise zumindest eine dunkle Buntfarbe, wobei die dunkle Buntfarbe mit Vorteil einen hohen Kontrast zu den reversibel magnetisch ausrichtbaren Pigmenten und/ oder den optisch variablen Effektpigmenten aufweist. Mit besonderem Vorteil weist die dunkle Buntfarbe einen im CIELAB-Farbraum angegebenen L*-Wert von kleiner 60 auf.

In einer vorteilhaften Gestaltung zeigt die zweite Effektschicht als optisch variablen Effekt einen Farbkippeffekt und die dunkle Buntfarbe ist so ausgewählt, dass sie den Farbkippeffekt der zweiten Effektschicht verstärkt. Dies kann insbesondere dadurch geschehen, dass die dunkle Buntfarbe die Kippfarbe bei schräger Betrachtung aufnimmt, wie weiter unten anhand eines konkreten Ausführungsbeispiels illustriert. Der Farbkippeffekt der zweiten Effektschicht kann durch eine Beimischung von Buntpigmenten zu dem Bindemittel der zweiten Effektschicht weiter verstärkt werden. Auch hier können beispielsweise Buntpigmente gewählt werden, die die Kippfarbe bei schräger Betrachtung aufnehmen.

Die Untergrundschicht enthält in einer Weiterbildung der Erfindung zwei, drei oder mehr verschiedene dunkle Farben, die in Form von Zeichen, Mustern oder Ornamenten angeordnet sind. Dabei sind mit Vorteil die dunkleren oder unbunteren der Farben zum großen Teil von den helleren oder bunteren Farben umgeben. Die Untergrundschicht enthält in bevorzugten Gestaltungen neben Teilbereichen mit der dunklen Buntfarbe auch schwarze Teilflächen, in denen der Effekt der reversibel magnetisch ausrichtbaren Pigmente besonders stark hervortritt.

In einer weiteren bevorzugten Gestaltung enthält die Untergrundschicht mindestens zwei, insbesondere dunkle Farben, die einen ähnlichen Helligkeitswert bzw. eine ähnliche Dunkelstufe aufweisen und ferner einen Farbton aufweisen, der im Goethe-Farbkreis benachbart liegt. Bei den mindestens zwei Farben der Untergrundschicht kann es sich z.B. um Blau und Grün handeln, die im Goethe-Farbkreis benachbart liegen. Dies hat den Vorteil, dass der Hell-/Dunkelkontrast mit und ohne Anlegen eines Magnetfelds ähnlich ist, so dass bei der Verifikation mittels eines Magnetfeldes in der Regel keine signifikante Veränderung des optischen Eindrucks für den Betrachter hervorgerufen wird und ohne Anlegen eines Magnetfeldes eine zum die wenigstens zwei Farben umgebenden Bereich gut integrierte Aufsichtsinformation im Bereich der zwei Farben der Untergrundschicht erkennbar ist.

Zum Aufbringen der Untergrundschicht kommen insbesondere Druckverfahren und dabei bevorzugt Offsetdruck und indirekter Hochdruck (Letterset) zum Einsatz, wobei grundsätzlich allerdings auch Buchdruck, Siebdruck, Tiefdruck und Ink Jet geeignet sind. Die Untergrundschicht wird vorzugsweise als dünne, hochdeckende Schicht aufgebracht. Als Bindemittelsysteme können bei Offsetdruck und Letterset insbesondere konventionell trocknende Offsetfarben oder UV-härtende Offsetfarben verwendet werden, beim Siebdruck kommen neben wässrigen Dispersionsfarben auch UV-härtende Farben in Betracht. Die Untergrundschicht kann auch eine Haftschicht sein, d.h. sie kann die Haftung der ersten Effektschicht auf dem Substrat verbessern. Darüber hinaus kann die Untergrundschicht auch die Substratoberfläche glätten und/oder die Kapillaren eines saugfähigen Substrates zumindest teilweise schließen, um ein glatteres Aufbringen der ersten Effektschicht zu ermöglichen und/ oder die physikalische Beständigkeit der ersten Effektschicht zu verbessern.

Zur Farbgebung können neben Buntpigmenten auch Rußpartikel zum Einsatz kommen. Daneben kann die Untergrundschicht beispielsweise auch mit fluoreszierenden Pigmenten und/oder mit Metallpigmenten und/oder Metalloxidpigmenten versehen sein.

Bei der ersten Effektschicht sind die reversibel magnetisch ausrichtbaren Pigmente mit Vorteil jeweils in einer Mikrokapsel verkapselt, in der sie im Wesentlichen frei drehbar sind. Ohne äußeres Magnetfeld sind die Pigmente dabei innerhalb ihrer Mikrokapsel im Wesentlichen isotrop ausgerichtet. Die Mikrokapseln der reversibel magnetisch ausrichtbaren Pigmente haben vorzugsweise eine Größenverteilung mit einem d₉₅-Wert von 45 µm oder weniger, besonders bevorzugt ist der d₉₅-Wert sogar kleiner als 30 µm. Für die konkreten Ausgestaltungen und Varianten der reversibel magnetisch ausrichtbaren Pigmente und der Mikrokapseln wird auf die insoweit in die vorliegende Beschreibung aufgenommene Offenbarung der Druckschriften WO 2009/074284 A2 und WO 2012/130370 A1 verwiesen.

Alternativ zu den derzeit bevorzugten Mikrokapseln mit reversibel magnetisch ausrichtbaren Pigmenten, Kapselfüllung und Kapselhülle ist es des Weiteren auch denkbar, Mikrokapseln einzusetzen, die einen anderen, magnetisch beeinflussbaren Kapselinhalt aufweisen. Beispielsweise ist es denkbar, dass die Mikrokapseln magnetisch ausrichtbare Fluide enthalten, wie dies in der Anmeldung WO 2010/139427 A1 offenbart ist. Für die konkreten Ausgestaltungen und Varianten solcher Kapseln wird die Offenbarung der Druckschrift WO 2010/139427 A1 in die Beschreibung der vorliegenden Anmeldung aufgenommen. Denkbar ist es ferner, dass die Mikrokapseln Stoffe enthalten, die die reversible Ausbildung photonischer Kristalle in einem Magnetfeld ermöglichen. Für die konkreten Ausgestaltungen dieser Mikrokapseln wird insoweit die Offenbarung der Druckschriften WO 2010/142391 A1 und WO 2010/142553 A1 in die vorliegende Beschreibung aufgenommen. Ferner ist es denkbar, dass Mikrokapseln mit einer Vielzahl von magnetischen, lichtundurchlässigen Pigmenten mit einem mittleren Teilchendurchmesser in einem Bereich von 0,1 µm bis 10 µm eingesetzt werden. Für konkrete Ausgestaltungen und Varianten solcher Mikrokapseln wird insoweit die Offenbarung der Druckschrift WO 2013/056782 A1 in die vorliegende Beschreibung aufgenommen.

Ferner ist es denkbar, dass die Mikrokapseln ein magnetisches Material enthalten, das in einem Magnetfeld in eine bestimmte Richtung, d.h. in einen bestimmten Bereich der Mikrokapsel wandert. Solche sogenannten "Migrationskapseln" enthalten bevorzugt ein farbiges und magnetisches Pigment und ein andersfarbiges, nicht-magnetisches Pigment, so dass sich in einem Magnetfeld für den Betrachter ein bestimmter Farbeindruck ergibt, der bei Entfernung des Magnetfeldes wieder verschwindet oder sich verändert. Solche Migrationskapseln sind also ebenfalls ein durch ein Magnetfeld beeinflussbares Sicherheitsmerkmal und können zusätzlich oder alternativ in dem erfindungsgemäßen Sicherheitselement vorgesehen sein.

Sämtliche vorstehend genannten Mikrokapseln mit magnetisch beeinflussbaren Stoffen können alternativ oder zusätzlich zu den Mikrokapseln mit magnetisch ausrichtbaren Pigmenten in dem erfindungsgemäßen Sicherheitselement vorgesehen sein.

Die erste Effektschicht wird vorzugsweise mittels rotativem Siebdruck oder im Flachbett-Siebdruck aufgebracht. In beiden Fällen wird für die Druckfarbe mit Vorteil ein UV-härtendes Bindemittel gewählt, wobei der vernetzbare Anteil vorzugsweise oberhalb von 90 % liegt. Bevorzugte Vernetzungsreaktionen sind radikalische oder kationische Kettenreaktionen. Ebenfalls bevorzugt sind UV-Farben mit einem geringen Anteil, insbesondere von weniger als 10 % Lösemittel im Bindemittel. Besonders bevorzugt sind Bindemittel mit einem Lösemittelgehalt von Null (in der Regel als 100 %-UV-Systeme bezeichnet), die es mit besonderem Vorteil ermöglichen, die erste Effektschicht nur Sekundenbruchteile vor der Härtung durch UV-Bestrahlung aufzubringen. Neben den genannten, derzeit bevorzugten Bindemittelsystemen, kommen auch Wasser-/UV-Siebdruckfarben, wässrige Dispersionsfarben und beim Flachbett-Siebdruck auch thermisch schmelzende bzw. gelierende Farben, wie etwa Plastisole, in Betracht.

In einer vorteilhaften Ausgestaltung enthält die erste Effektschicht neben den reversibel magnetisch ausrichtbaren Pigmenten keine weiteren Pigmente.

In anderen, ebenfalls vorteilhaften Ausgestaltungen enthält die erste Effektschicht neben den reversibel magnetisch ausrichtbaren Pigmenten auch anisotrope, optisch variable Effektpigmente, insbesondere Flüssigkristallpigmente, Perlglanzpigmente oder Interferenzschichtpigmente, die vorzugsweise nicht-magnetisch und transparent oder transluzent sind. Weiter kann die erste Effektschicht auch Buntpigmente und Fluoreszenzpigmente enthalten. Das Massenverhältnis der reversibel magnetisch ausrichtbaren Pigmente zu den weiteren Pigmenten liegt mit Vorteil zwischen 10:1 und 1:1.

Wie vorstehend erwähnt, kann die erste Effektschicht, die zweite Effektschicht und die Untergrundschicht Buntpigmente enthalten. Alternativ oder zusätzlich zu den Buntpigmenten kann die erste Effektschicht, die zweite Effektschicht oder die Untergrundschicht farbige Polymerkügelchen enthalten, die einen mittleren Durchmesser von ca. 1 µm bis ca. 40 µm, bevorzugt von ca. 2 µm bis ca. 25 µm und besonders bevorzugt von 2 µm bis 10 µm aufweisen. Die Polymerkügelchen bestehen in der Regel aus einem transparenten oder transluzenten Kunststoffmaterial, vorzugsweise aus einem Polyurethan oder Polyacrylat, wobei das Kunststoffmaterial ein Farbmittel, insbesondere einen Farbstoff oder ein Pigment umfasst. Im Rahmen der vorliegenden Erfindung umfasst der Begriff "Farbmittel" zumindest Pigmente und Farbstoffe, wobei Farbstoffe als in einem bestimmten Medium lösliche Stoffe und Pigmente als in einem bestimmten Medium unlösliche Stoffe aufgefasst werden. Geeignete farbige Polymerkügelchen der oben beschriebenen Art können z.B. von der japanischen Firma Negami Chemical Industrial Co., Ltd. unter dem Namen "Art Pearl" bezogen werden werden.

Insbesondere wenn die erste Effektschicht die vorstehend beschriebenen farbigen Polymerkügelchen aufweist, ergibt sich in vorteilhafter Weise eine bevorzugte Anordnung der Polymerkügelchen in den Zwischenräumen zwischen den magnetisch ausrichtbaren Effektpigmenten. Der durch die Veränderung der Ausrichtung hervorgerufene Effekt der magnetisch ausrichtbaren Effektpigmente, insbesondere der Farbkippeffekt, wird durch die Anordnung der farbigen Polymerkügelchen in den Zwischenräumen zwischen den magnetisch ausrichtbaren Effektpigmenten nur wenig beeinflusst und kommt so mit keiner oder nur einer geringen Abschwächung durch die Farbe der Polymerkügelchen zur Geltung. Der Wiedererkennungswert und damit der Schutz gegen Nachahmung und Fälschung eines solche farbige Polymerkügelchen aufweisenden Sicherheitselements ist damit sehr hoch. Des Weiteren kann durch eine geeignete Wahl der Größe der Polymerkügelchen die Viskosität der Schicht, in der die Polymerkügelchen angeordnet sind, gesteuert werden. Durch Vorsehung von Polymerkügelchen mit einer bestimmten Größe bzw. einer bestimmten Größenverteilung in der jeweiligen Schicht, insbesondere der für die jeweilige Schicht vorgesehenen Druckfarbe, kann die Viskosität der Schicht/Druckfarbe gesteuert werden. Die Anpassung der Viskosität einer Schicht des Sicherheitselements kann alternativ zur Vorsehung der oben beschriebenen Polymerkügelchen auch durch Wachskugeln erfolgen, die besonders bevorzugt auch ein Farbmittel, insbesondere ein Pigment oder einen Farbstoff, enthalten können.

Es versteht sich, dass in der ersten Effektschicht, zweiten Effektschicht, der Untergrundschicht und jeder anderen für das erfindungsgemäße Sicherheitselement vorgesehenen Schicht auch Kombinationen der beschriebenen Farbmittel vorgesehen werden können. Beispielsweise kann die erste Effekschicht farbige Polymerkügelchen mit Pigmenten enthalten, während in der zweiten Effektschicht als Farbmittel Farbstoffe zugesetzt sind. Denkbar ist selbstverständlich auch die Vorsehung eines Farbstoffs und eines Pigments in Kombination in einer der vorstehend genannten Schichten.

Die zweite Effektschicht ist in einer vorteilhaften Erfindungsvariante über der ersten Effektschicht angeordnet und überdeckt vorzugsweise zwischen 10 % bis 100 %, besonders bevorzugt zwischen 40 % und 70 % der Fläche der ersten Effektschicht. Überdeckt die zweite Effektschicht mehr als 40 %, insbesondere mehr als 60 % der ersten Effektschicht, so werden mit Vorteil nicht nur in der ersten Effektschicht, sondern auch in der zweiten Effektschicht reversibel magnetisch ausrichtbare Pigmente vorgesehen, welche dann die optische Wirkung des interaktiv auslösbare Echtheitskennzeichens verstärken.

In einer anderen, ebenfalls vorteilhaften Erfindungsvariante ist die zweite Effektschicht neben der ersten Effektschicht angeordnet, wobei die erste und zweite Effektschicht besonders bevorzugt passergenau nebeneinander angeordnet sind.

Die zweite Effektschicht enthält mit Vorteil anisotrope, optisch variable Effektpigmente, insbesondere Flüssigkristallpigmente, Perlglanzpigmente oder Interferenzschichtpigmente. Die optisch variablen Effektpigmente der zweiten Effektschicht sind mit Vorteil nicht-magnetisch. Sie können beispielsweise auf der Basis von flüssigkristallinen Polymeren hergestellte Pigmente oder sogenannte Perlglanzpigmente, wie etwa die von der Firma Merck KGaA unter der Bezeichnung Iriodin^{®} oder Colorcrypt vertriebenen Silberweiß-, Goldglanz- oder Metallglanzpigmente umfassen. Sowohl Pigmente auf der Basis von flüssigkristallinem Material als auch Perlglanzpigmente sind für sich genommen transluzent.

In anderen, ebenfalls vorteilhaften Ausgestaltungen der Erfindung sind die Effektpigmente der zweiten Effektschicht durch Interferenzschichtpigmente gebildet. Derartige Interferenzschichtpigmente weisen typischerweise einen Dünnschichtaufbau auf, der zweckmäßig zumindest eine Reflexionsschicht, eine Absorberschicht und eine zwischen der Reflexionsschicht und der Absorberschicht angeordnete dielektrische Abstandsschicht enthält. Manche Interferenzschichtpigmente enthalten eine zusätzliche magnetische Schicht, beispielsweise kann die Reflexionsschicht selbst magnetisch sein, oder es kann eine magnetische Schicht unterhalb der Reflexionsschicht oder zwischen zwei Reflexionsschichten vorgesehen sein. Beispiele für als Effektschichten geeignete Druckfarben mit mehrschichtigen Interferenzschichtpigmenten sind OVI^{®} oder (die magnetisch ausrichtbare) OVMI^{®} der Firma SICPA. Interferenzschichtpigmente können für sich genommen transluzent sein, wenngleich auch opake Interferenzschichtpigmente bekannt sind. Insbesondere die magnetischen Interferenzschichtpigmente sind in der Regel opak.

Es versteht sich, dass die zweite Effektschicht auch eine Beugungsstruktur, insbesondere ein Hologramm, umfassen kann. Beugungsstrukturen fallen unter den in dieser Anmeldung definierten Begriff "optisch variable Schicht" und stellen daher eine erfindungsgemäße zweite Effektschicht dar. Je nach Ausgestaltung kann die Beugungsstruktur, insbesondere ein Hologramm, vollflächig ausgeführt sein oder aber ergänzend zu der derzeit bevorzugten zweiten Effektschicht mit optisch variablen Pigmenten. Die Beugungsstrukturen können als Durchsichtselement, insbesondere als Durchsichtshologramm, ausgebildet sein, und den Blick auf die darunter angeordnete erste Effektschicht für den Betrachter ermöglichen. Darüber hinaus kann aber auch ein Teil der Beugungsstruktur eine hochbrechende Schicht oder eine Metallisierung aufweisen, so dass in den Bereichen mit hochbrechender Schicht oder Metallisierung für den Betrachter eine reflektive Beugungsstruktur, insbesondere ein Reflektionshologramm, erkennbar wird und dort der Blick auf die insbesondere darunter angeordnete erste Effektschicht für den Betrachter im Wesentlichen nicht zulässt. Selbstverständlich kann die als Beugungsstruktur ausgebildete zweite Effektschicht erfindungsgemäß auch neben der ersten Effektschicht angeordnet sein.

Die zweite Effektschicht wird vorzugsweise ebenfalls mittels rotativem Siebdruck oder im Flachbett-Siebdruck aufgebracht. Das Bindemittel für die optisch variablen Effektpigmente ist mit Vorteil ein UV-härtendes Bindemittel, wobei der vernetzbare Anteil zweckmäßig oberhalb von 50 % liegt. Besonders bevorzugt werden die erste und zweite Effektschicht in einem Druckgang, kurz nacheinander und in einer Druckmaschine aufgebracht, wobei nach dem Aufbringen der ersten Effektschicht vorteilhaft eine kurze Zwischentrocknung, beispielsweise durch UV-Bestrahlung, durchgeführt wird. Zweckmäßig wird die erste Effektschicht vor dem Aufbringen der zweiten Effektschicht nicht vollständig gehärtet, um einen guten chemischen Verbund der beiden Effektschichten zu ermöglichen.

In einer besonders bevorzugten Ausgestaltung, bei der die zweite Effektschicht optisch variable und zugleich magnetisch ausrichtbare Effektpigmente, insbesondere die weiter oben erwähnten magnetischen Interferenzschichtpigmente, enthält, werden die magnetischen Effektpigmente in der zweiten Effektschicht vor der vollständigen Härtung ausgerichtet. Diese Ausrichtung wird bevorzugt magnetisch durchgeführt.

Neben den oben genann n und derzeit bevorzugten Bindemittelsystemen kommen für die zweite Effektschicht auch Wasser-/UV-Siebdruckfarben, wässrige Dispersionsfarben und im Flachbett-Siebdruck auch thermisch schmelzende bzw. gelierende Farben, wie etwa Plastisole, in Betracht.

In einer vorteilhaften Ausgestaltung enthält die zweite Effektschicht neben den optisch variablen Effektpigmenten keine weiteren Pigmente.

In anderen, ebenfalls vorteilhaften Ausgestaltungen enthält die zweite Effektschicht neben den optisch variablen Effektpigmenten auch reversibel magnetisch ausrichtbare Pigmente, die die optische Wirkung des interaktiv auslösbaren Echtheitskennzeichens verstärken (im Fall übereinander angeordneter Effektschichten) oder räumlich variieren (im Fall nebeneinander angeordneter Effektschichten). Auch Buntpigmente können vorgesehen sein, insbesondere um den optisch variablen Effekt der Effektpigmente zu verstärken. Das Massenverhältnis der optisch variablen Effektpigmente zu den weiteren Pigmenten liegt mit Vorteil zwischen 10:1 und 2:1. Enthält die zweite Effektschicht Buntpigmente, so kann sie mit Vorteil auch in Bereichen außerhalb der ersten Effektschicht und/oder in Bereichen außerhalb der Untergrundschicht aufgebracht werden, um diese Bereiche noch gestalterisch zu nutzen.

Ferner kann in allen Gestaltungen über der ersten Effektschicht zumindest in Teilbereichen eine transluzente, transparente oder opake Beschichtung vorgesehen sein. Auf diese zusätzliche, insbesondere opake Beschichtung kann dann mit Hilfe eines Druckverfahrens, welches eine höhere Auflösung aufweist als das zur Bedruckung der ersten Effektschicht vorgesehene Verfahren, eine weitere, insbesondere nicht opake Schicht aufgedruckt werden. Wird die erste Effektschicht beispielsweise im Siebdruck aufgebracht, kann auf der zusätzlichen Beschichtung ein Aufdruck angebracht werden, der eine höhere Auflösung als die erste Effektschicht aufweist. Diese Variante hat im Übrigen den Vorteil, dass das Sicherheitselement im Hinblick auf das Design sehr gut zu den umgebenden Bereichen abgestimmt werden kann.

Die zusätzliche, insbesondere opake Beschichtung kann beispielsweise im Tiefdruckverfahren, insbesondere Stichtiefdruckverfahren, oder in einem Offsetdruckverfahren unter Einsatz opaker Druckfarben aufgebracht werden. Die Deckfähigkeit der zusätzlich aufgebrachten Beschichtung kann z.B. mit Hilfe von Titandioxid eingestellt werden. Bei einer besonders vorteilhaften Variante weisen die opake Beschichtung und die darüber angeordnete, insbesondere nicht opake Farbe in Kombination einen ähnlichen Farbton auf wie die erste Effektschicht.

Schließlich werden bei einer weiteren vorteilhaften Variante mindestens zwei transparente oder transluzente Druckfarben für den Aufdruck auf die zusätzliche Beschichtung gewählt, wobei in einem ersten Teilbereich die erste transparente oder semitransparente Druckfarbe zu einer Steigerung und in einem zweiten Teilbereich die zweite transparente oder semitransparente Druckfarbe zu einer Schwächung des Hell-/Dunkelkontrasts beim Anlegen eines Magnetfeldes führt.

Die oben beschriebene zusätzliche Beschichtung kann in allen Varianten zusätzlich oder alternativ zu der nachfolgend beschriebenen Schutzschicht vorgesehen sein oder diese Schutzschicht zumindest teilweise ersetzen.

In einer alternativen Erfindungsvariante kann die zweite Effektschicht im Letterset, Offset oder Buchdruck mit einer UV-härtenden Flüssigkristallfarbe mit chiralen Verdrillern aufgebracht werden. In dieser Erfindungsvariante enthält die zweite Effektschicht keine optisch variablen Pigmente, die optische variable Wirkung entsteht vielmehr großflächig bei der vorzugsweise radikalischen Härtung der Flüssigkristallfarbe. Derartige Flüssigkristallfarben können auch mit Druckverfahren verdruckt werden, die sich nicht für die relativ großen, optisch variablen Effektpigmente eignen, wie etwa Hochdruck, Offsetdruck oder indirekter Hochdruck. Dennoch weisen die Flüssigkristallfarben nach dem Härten einen Farbkippeffekt mit einem visuell ansprechenden Farbflop auf und das reflektierte Licht weist je nach der Art der eingesetzten Verdriller eine charakteristische Zirkularpolarisation auf. Auch wenn die Flüssigkristallfarbe keine optisch variablen Pigmente enthält, so kann es in manchen Gestaltungen vorteilhaft sein, wenn sie reversibel magnetisch ausrichtbare Pigmente und/oder Buntpigmente mit den oben angegebenen vorteilhaften Wirkungen enthält.

Schließlich kann in allen Gestaltungen über dem optisch variablen Farbschichtaufbau eine optionale Schutzschicht vorgesehen sein. Die Schutzschicht bietet vor allem bei Gestaltungen Vorteile, bei denen für die zweite Effektschicht kein 100 %-UV-Bindemittel verwendet wird. Die reversibel magnetisch ausrichtbaren Pigmente werden durch die Schutzschicht zusätzlich geschützt. Durch eine pigmentierte Schutzschicht können auch die Bereichsgrenzen von nebeneinander geordneten Effektschichten versteckt werden. Die Schutzschicht wird beispielsweise im Flexodruck aufgebracht, wobei als Bindemittelsysteme UV-härtende Bindemittel, Wasser-/UV-Siebdruckfarben oder wässrige Dispersionsfarben zum Einsatz kommen können. Die Schutzschicht kann unpigmentiert sein oder mit Mattierungsmitteln, Kratzschutzadditiven oder Fluoreszenzpigmenten versehen sein. Die Aufbringung kann auch im Buchdruck, Letterset oder Offsetdruck erfolgen, wobei als Bindemittelsysteme UV-härtende Hochdruckfarben oder konventionell trocknende Farben verwendet werden können. Auch hier kann die Schutzschicht unpigmentiert sein oder mit Füllstoffen, Phosphoreszenzpigmenten oder Fluoreszenzpigmenten versehen sein. Des Weiteren kann die Schutzschicht sämtliche Buntpigmente enthalten, die weiter oben in dieser Anmeldung beschrieben wurden.

Ist die zweite Effektschicht durch eine UV-härtenden Flüssigkristallfarbe mit chiralen Verdrillern gebildet, kann auf eine separate Schutzschicht auch verzichtet werden, da die zweite Effektschicht dann selbst als Schutzschicht wirkt.

Für die oben angesprochenen radikalisch härtenden UV-Bindemittel können verschiedenste industriell verfügbare Produkte eingesetzt werden. Bevorzugt kommen Bindemittel mit guter Haftung, guten chemischen Beständigkeiten und guten Durchhärtungseigenschaften zum Einsatz. Derartige Bindemittel bestehen typischerweise aus 65 % bis 85 % Acrylharzmischungen, meist Epoxyacrylat- und/ oder Urethanacrylatharze enthaltend, deren Reaktivität durch den Zusatz von aminfunktionalisierten Coinitiatoren teilweise noch erhöht wurde. Typischerweise bestehen die verbleibenden 15 % bis 35 % aus Mischungen von ein- und mehrfunktionalen Mono- oder Oligomeren, die der Quervernetzung dienen. Typische Vertreter sind HDDA (Hexandioldiacrylat), TPGDA (Triopropylenglycoldiacrylat) und IBOA (Isobornylacrylat).

UV-vernetzbare wässrige Dispersionsbindemittel, im Rahmen dieser Anmeldung oft kurz als Wasser-/UV-Bindemittel bezeichnet, bestehen neben einem Fotoinitiator aus UV-härtbaren, wässrigen Acrylatdispersionen, wobei wegen ihrer guten Beständigkeiten oft Urethanacrylate eingesetzt werden. Auch verschiedene am Markt verfügbare Acrylat-Copolymere können eingesetzt werden. Die Dispersionen besitzen meist einen Feststoffgehalt von 30 % bis 45 %, der Rest besteht aus Wasser und Additiven, die eine vorzeitige Agglomeration der einzelnen Dispersionspartikel verhindern.

Die Erfindung umfasst auch ein Verfahren zum Herstellen eines optisch variablen Sicherheitselements zur Absicherung von Wertgegenständen, bei dem auf einem Substrat eine dunkle Untergrundschicht angeordnet wird und über der Untergrundschicht ein optisch variabler Farbschichtaufbau angeordnet wird, der eine erste Effektschicht und eine zweite Effektschicht umfasst, wobei die erste Effektschicht auf der Untergrundschicht angeordnet wird und durch ein äußeres Magnetfeld reversibel ausrichtbare Effektpigmente enthält, und wobei die zweite Effektschicht eine optisch variable Schicht darstellt, die auf und/oder neben der ersten Effektschicht angeordnet wird.

Die Erfindung enthält ferner eine Sicherheitsanordnung zur Absicherung von Sicherheitspapieren, Wertdokumenten und dergleichen, mit einem Sicherheitselement der oben beschriebenen Art und mit einem Verifikationselement mit einem Magnetbereich. In dem Magnetbereich liegt mit Vorteil magnetisches Material in Form von Mustern, Linien, Zeichen oder einer Codierung vor. Das von dem magnetischen Material so dargestellte Motiv kann offen sichtbar sein oder auch ohne Hilfsmittel verborgen sein, beispielsweise durch Überdeckung mit einer dunklen Druckschicht. Vorzugsweise ist der Magnetbereich im Wesentlichen senkrecht zur Ebene des Verifikationselements magnetisiert.

Der Magnetbereich des Verifikationselements kann mit Vorteil durch einen Permanentmagneten eines tragbaren oder stationären Geräts, insbesondere eines Mobiltelefons, eines tragbaren Computers, eines tragbaren Audio- und/ oder Videoabspielgeräts oder eines Warensicherungssystems, gebildet sein.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen, Klappen oder Falten des Datenträgers über das Verifikationselement bringbar ist.

Anzumerken ist noch, dass bei einer weiteren denkbaren Ausführungsform auf die dunkle Untergrundschicht bereichsweise oder ganz verzichtet wird und die erfindungsgemäße erste Effektschicht und zweite Effektschicht auf einem transparenten/transluzenten Substrat angeordnet werden. Bei dem transparenten/transluzenten Substrat kann es sich beispielsweise um eine selbsttragende Folie handeln, die als Abdeckung einer fensterartigen Durchbrechung in einem Datenträger dient. Die fensterartige Durchbrechung kann als ein zusammenhängender Durchbrechungsbereich oder aber als Vielzahl einzelner Durchbrechungsbereiche ausgebildet sein. Denkbar ist darüber hinaus auch die Anordnung eines solchen transparenten/transluzenten Substrats mit erster und zweiter Effektschicht auf z.B. die äußere Folienlage einer Folienverbund-Banknote mit dem Schichtaufbau Folie/Papier/Folie, wobei die Aufbringung zweckmäßigerweise in einem transparenten/ transluzenten Bereich dieser Verbundbanknote erfolgt. Im Fall der vorstehend genannten Ausführungsformen, bei denen das Sicherheitselement zunächst keine oder nur bereichsweise eine dunkle Untergrundschicht aufweist, wird die für einen hohen Kontrast für die reversibel magnetisch ausrichtbaren Pigmente und/oder optisch variablen Effektpigmente erforderliche dunkle Farbe vorteilhafterweise durch eine dunkle Schicht gebildet, die aus Sicht des Betrachters hinter dem transparenten/transluzenten Bereich und der ersten und zweiten Effektschicht angeordnet ist und quasi die dunkle Untergrundschicht des derzeit beanspruchten Sicherheitselements bildet. Diese zusätzliche dunkle Schicht kann beispielsweise durch ein dunkles Substrat oder durch eine dunkle Beschichtung auf einem solchen Substrat gebildet werden. Denkbar ist auch, dass eine solche dunkle Schicht zwischen dem Verifikationselement mit Magnetbereich und der ersten und zweiten Effektschicht vorgesehen wird. Mit besonders großem Vorteil kann es sich bei der dunklen Schicht auch um einen dunklen Bereich des Verifikationselementes handeln, insbesondere um einen dunklen Gehäusebereich des Verifikationselementes, insbesondere eines Mobiltelefons. Bei den vorstehend genannten Ausführungsformen kann der Betrachter nicht nur Reflektions-, sondern auch Transmissionseigenschaften erfassen. Darüber hinaus ist eine Verifikation auch beidseitig möglich, vorausgesetzt, die Anordnung von erster und zweiter Effektschicht auf transparentem/transluzenten Substrat erscheint von beiden Seiten für den Betrachter zumindest transluzent.

Auch sei an dieser Stelle erwähnt, dass ein erfindungsgemäßes Sicherheitselement auf Substraten angeordnet sein kann, die im gesamten Bereich oder aber in Teilbereichen des erfindungsgemäßen Sicherheitselementes erhabene und vertiefte Bereiche aufweisen. Beispielsweise kann das Substrat vor Anordnung des erfindungsgemäßen Sicherheitselementes mit einem geeigneten Prägewerkzeug, insbesondere einer Tiefdruckplatte, und besonders bevorzugt mittels einer Stichtiefdruckplatte, mit erhabenen und vertieften Bereichen ausgestattet werden. Für das auf einem solchen verprägten Untergrund angeordnete erfindungsgemäße Sicherheitselement ergeben sich zusätzlich zu den beschriebenen Effekten, welche auf die magnetisch ausrichtbaren Effektpigmente bzw. die optisch variablen Pigmente zurückzuführen sind, noch weitere Effekte, die auf die Anordnung des Sicherheitselementes in den vertieften bzw. erhöhten Bereich des verprägten Substrates zurückzuführen sind. Beispielsweise kann ein erfindungsgemäßes Sicherheitselement, das in einem vertieften bzw. erhöhten Bereich des verprägten Substrats angeordnet ist, einen unterschiedlichen optischen Eindruck beim Betrachter hervorrufen. Bei diesem zusätzlichen Effekt handelt es sich demnach um Abschattungs- und Farbkippeffekte, die darauf zurückzuführen sind, dass die magnetisch ausrichtbaren Effektpigmente bzw. die optisch variablen Pigmente auf Flanken unterschiedlicher Orientierung der verprägten Bereiche des Substrats angeordnet sind, so dass diese Pigmente einfallendes Licht unterschiedlich reflektieren. Der sich im Ergebnis für die Anordnung eines erfindungsgemäßen Sicherheitselements auf einem verprägten Bereich ergebende, veränderliche, optisch variable Eindruck weist eine außerordentlich hohe Komplexität und damit einen sehr hohen Schutz gegen Nachahmung auf.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: in (a) und (b) schematisch zwei Schichtenfolgen erfindungsgemäßer Sicherheitselemente,
- Fig. 3: schematisch in (a) eine Aufsicht auf ein Sicherheitselement nach einem Ausführungsbeispiel der Erfindung und in (b) einen Querschnitt durch das Sicherheitselement von (a) entlang der Linie B-B,
- Fig. 4: schematisch ein Sicherheitselement nach einem anderen Ausführungsbeispiel der Erfindung im Querschnitt,
- Fig. 5: schematisch ein Sicherheitselement nach einem weiteren Ausführungsbeispiel der Erfindung im Querschnitt,
- Fig. 6: schematisch ein Sicherheitselement nach noch einem weiteren Ausführungsbeispiel der Erfindung im Querschnitt,
- Fig. 7: eine Abwandlung des Sicherheitselements der Fig. 6,
- Fig. 8: schematisch ein Sicherheitselement nach einem weiteren Ausführungsbeispiel der Erfindung im Querschnitt, und
- Fig. 9: schematisch eine Identifikationskarte mit einem erfindungsgemäßen Sicherheitselement.

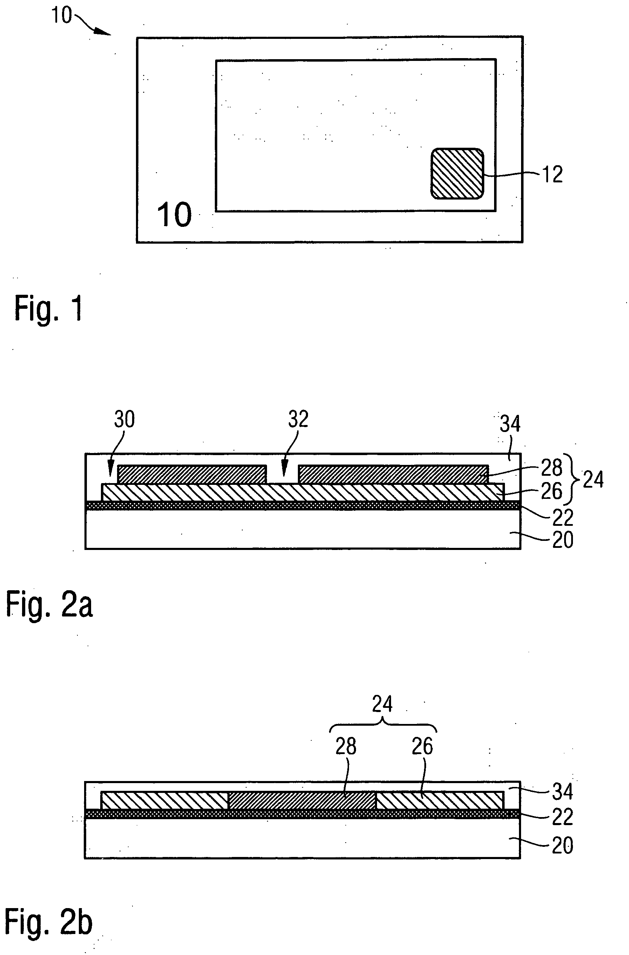

Die Erfindung wird nun am Beispiel von Sicherheitselementen für Banknoten und andere Wertdokumente erläutert. Fig. 1 zeigt dazu eine schematische Darstellung einer Banknote 10, die mit einem erfindungsgemäßen Sicherheitselement in Form eines aufgeklebten Transferelements 12 versehen ist. Das Transferelement 12 zeigt einerseits einen Farbkippeffekt, beispielsweise einen Farbwechsel von Grün bei senkrechter Aufsicht zu Blauviolett bei schräger Betrachtung, und enthält andererseits ein reversibles und durch eine magnetische Verifikationseinrichtung interaktiv auslösbares Echtheitskennzeichen.

Das interaktiv auslösbare Echtheitskennzeichen ist dabei durch zumindest eine Effektschicht des Transferelements 12 gebildet, die eine Vielzahl von Mikrokapseln enthält, die jeweils eine Kapselhülle, eine in der Kapselhülle eingeschlossene Trägerflüssigkeit und zumindest ein magnetisch ausrichtbares Pigment enthalten. Das Pigment ist dabei in der Mikrokapsel im Wesentlichen frei drehbar und durch ein äußeres Magnetfeld reversibel ausrichtbar. Derartige interaktiv auslösbare Echtheitskennzeichen sind mit ihrem Aufbau und ihrer Funktionsweise beispielsweise in den Druckschriften WO 2009/074284 A2 und WO 2012/130370 A1 näher beschrieben, deren Offenbarung insoweit in die vorliegende Beschreibung aufgenommen wird.

Bei allen Ausführungsformen, die magnetisch ausrichtbare Effektpigmente enthalten, können Effektpigmente der gleichen Art, aber auch unterschiedlicher Art eingesetzt werden. Beispielsweise ist es denkbar, in der ersten Effektschicht Mikrokapseln mit magnetisch ausrichtbaren Pigmenten einer ersten Art einzusetzen und Mikrokapseln mit magnetische ausrichtbaren Pigmenten einer zweiten Art einzusetzen. Die Pigmente erster und zweiter Art können sich z.B. in ihren magnetischen Eigenschaften unterscheiden, so dass durch die unterschiedlichen Eigenschaften der Pigmente z.B. erste und zweite Informationen mittels eines ersten und zweiten äußeren Magnetfeldes sichtbar gemacht werden, wobei bei der Beaufschlagung des Sicherheitselementes mit dem ersten äußeren Magnetfeld die erste Information und bei Beaufschlagung mit dem zweiten äußeren Magnetfeld die zweite Information sichtbar gemacht wird. Derartige Sicherheitselemente mit Pigmenten mit unterschiedlichen Eigenschaften sind in der WO 2012/130370 A1 näher beschrieben, deren Offenbarung insoweit in die vorliegende Beschreibung aufgenommen wird.

Neben dem Einsatz von Pigmenten mit unterschiedlichen magnetischen Eigenschaften ist es auch denkbar, andere Parameter mit Bezug auf die Mikrokapseln zu ändern. Z.B. können Mikrokapseln eingesetzt werden, die eingeschlossene Trägerflüssigkeiten mit unterschiedlichen Eigenschaften, insbesondere unterschiedlichen Viskositäten aufweisen. Auch dadurch lässt sich für die Bereiche mit Mikrokapseln unterschiedlicher Trägerflüssigkeit ein unterschiedliches Ansprechverhalten des Sicherheitselements bzw. der magnetischen Pigmente auf ein externes Magnetfeld hervorrufen.

Das oben beschriebene charakteristische, mehrstufige Ansprechverhalten auf ein äußeres Magnetfeld erhöht in vorteilhafte Weise weiter den Fälschungsschutz für das Sicherheitselement bzw. den damit gesicherten Datenträger.

Die in der vorliegenden Anmeldung beschriebenen besonderen Ausgestaltungen weisen in der Regel eine der beiden in den Figuren 2(a) und 2(b) gezeigten Schichtenfolgen auf. Mit Bezug auf Fig. 2 enthält ein erfindungsgemäßes optisch variables Sicherheitselement ein Substrat 20, eine auf dem Substrat 20 angeordnete Untergrundschicht 22 sowie einen über der Untergrundschicht 22 angeordneten optisch variablen Farbschichtaufbau 24, der eine erste Effektschicht 26 und eine zweite Effektschicht 28 umfasst.

Die erste Effektschicht 26 ist dabei stets auf der Untergrundschicht 22 angeordnet und enthält die oben angesprochenen, durch ein äußeres Magnetfeld reversibel ausrichtbaren Effektpigmente. Die zweite Effektschicht 28 stellt eine optisch variable Schicht dar, die auf der ersten Effektschicht 26 angeordnet sein kann, wie in Fig. 2(a) gezeigt, oder die alternativ neben der ersten Effektschicht 26 auf der Untergrundgrundschicht 22 angeordnet ist, wie in Fig. 2(b) illustriert. Besonders bevorzugt sind die erste und zweite Effektschicht dabei passergenau nebeneinander angeordnet. In machen Ausgestaltungen kann die zweite Effektschicht auch in Teilbereichen neben und in anderen Teilbereichen über der ersten Effektschicht angeordnet sein. Ist eine Schicht "auf" einer anderen Schicht angeordnet, so bedeutet dies im Rahmen der vorliegenden Anmeldung, dass die erste Schicht ohne Zwischenschichten direkt auf der anderen Schicht angeordnet ist.

Die erste und zweite Effektschicht werden bei allen Gestaltungen bevorzugt in einem Druckgang, kurz nacheinander und in einer Druckmaschine aufgebracht.

Wird die zweite Effektschicht 28 auf die erste Effektschicht 26 aufgebracht, so überdeckt die zweite Effektschicht 28 mit Vorteil zwischen 10 % und 100 %, insbesondere zwischen 40 % und 70% der Fläche der ersten Effektschicht 26, wie in Fig. 2(a) illustriert. Eine nicht vollständige Überdeckung der ersten Effektschicht 26 kann nicht überdeckte Bereiche 30 im Randbereich oder Aussparungen 32 im Inneren der zweiten Effektschicht 28 umfassen.

Werden sehr große Flächenanteile der ersten Effektschicht 26 mit der zweiten Effektschicht 28 überdruckt, so kann es sich empfehlen, die Sichtbarkeit des interaktiv auslösbaren Echtheitskennzeichens dadurch zu verstärken, dass nicht nur in der ersten Effektschicht 26, sondern auch in der zweiten Effektschicht 28 reversibel magnetisch ausrichtbare Pigmente vorgesehen werden.

Für diejenigen Effektschichten, die reversibel magnetisch ausrichtbare Pigmente enthalten, sind bevorzugt Bindemittel mit einem hohen Festkörperanteil von mehr als 90 %, besonders bevorzugt sogar 100 %-UV-Systeme verwendet, wie weiter unten genauer erläutert. Diese schützen die Mikrokapseln der reversibel magnetisch ausrichtbaren Pigmente besonders gut, da die Nassauftragsfilmdicke im Wesentlichen der Filmdicke nach der Trocknung entspricht, so dass die Mikrokapseln optimal eingebettet werden.

Allerdings führt die Verwendung nicht wegschlagender Bindemittel auch dazu, dass anisotrope, insbesondere die bevorzugt plättchenförmigen, optisch variablen Effektpigmente bei der Trocknung weniger stark ausgerichtet werden als beim Einsatz stark wegschlagender, wässriger Dispersionsfarben. Der durch den niedrigeren Ausrichtungsgrad weniger stark zur Geltung kommende optisch variable Effekt dieser Pigmente kann im Rahmen der vorliegenden Erfindung jedoch dadurch kompensiert werden, dass die Untergrundschicht zumindest in gewünschten Teilbereichen in einer dunklen Buntfarbe ausgeführt wird, die den Farbkippeffekt der optisch variablen Effektpigmente verstärkt.

Zeigen beispielsweise die in der zweiten Effektschicht 28 vorgesehenen optisch variablen Effektpigmente einen Farbkippeffekt mit einem Farbflop von einem grünen Aufsichtsfarbton zu einem blauvioletten Erscheinungsbild bei schräger Betrachtung, so kann dieser Farbwechsel durch eine Untergrundschicht mit dunkelvioletten Buntpigmenten deutlich verstärkt werden. Dies gilt insbesondere dann, wenn in der zweiten Effektschicht 28 neben den optisch variablen Effektpigmenten auch Mikrokapseln mit reversibel magnetisch ausrichtbaren Pigmenten vorgesehen sind und dementsprechend ein Bindemittel mit hohem Festkörperanteil für die zweite Effektschicht 28 verwendet wird. Die Verstärkung der Farbflops kann durch einen Zusatz einer geringen Menge an Buntpigmenten in das Bindemittel weiter gesteigert werden.

Insbesondere bei einer Kombination von Mikrokapseln und anisotropen, beispielsweise plättchenförmigen Effektpigmenten sind letztere vorzugsweise teilweise transparent oder transluzent ausgebildet, so dass die darunterliegenden Pigmente und Farbschichten gut zur optischen Wirkung beitragen können.

Schließlich kann in allen Gestaltungen über dem optisch variablen Farbschichtaufbau 24 eine Schutzschicht 34 vorgesehen sein.

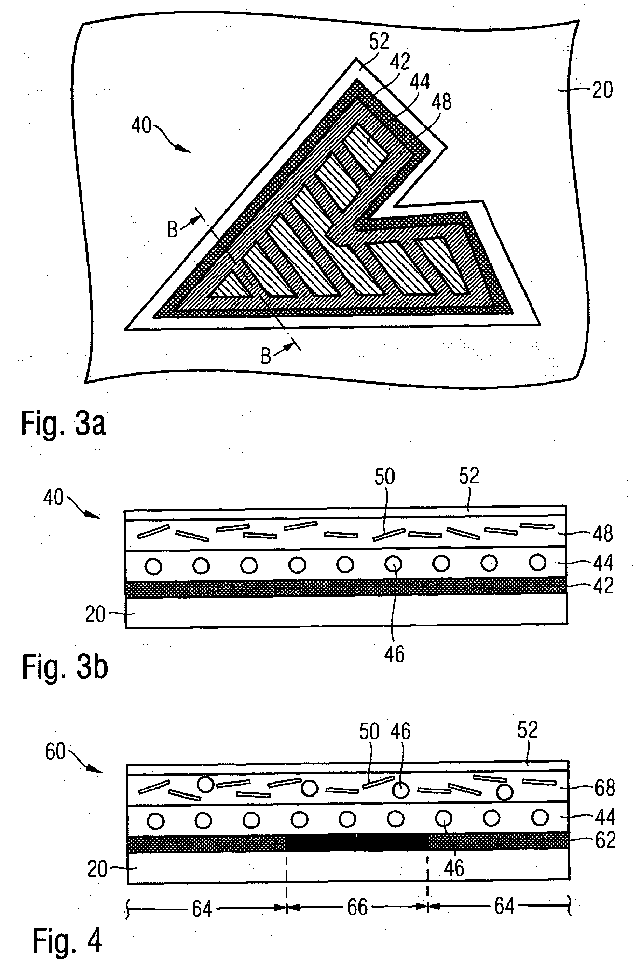

Bevorzugte Eigenschaften der einzelnen Schichten des Schichtaufbaus erfindungsgemäßer Sicherheitselemente wurden weiter oben im Detail geschildert. Nachfolgend werden mit Bezug auf die Figuren 3 bis 8 noch einige konkrete, besonders vorteilhafte und nicht einschränkend zu verstehende Ausführungsbeispiele näher beschrieben. Die Ausführungsbeispiele zeigen meist eine Übereinanderanordnung von erster und zweiter Effektschicht, es versteht sich aber nach den obigen Ausführungen, dass die zweite Effektschicht und die erste Effektschicht jeweils auch nebeneinander auf der Untergrundschicht angeordnet sein können.

Zunächst zeigt Fig. 3 in (a) eine Aufsicht auf ein Sicherheitselement 40 nach einem Ausführungsbeispiel der Erfindung und in (b) einen Querschnitt durch das Sicherheitselement 40 entlang der Linie B-B von Fig. 3(a). Wie aus der Figur ersichtlich, enthält das Sicherheitselement 40 ein Substrat 20, auf dem eine Untergrundschicht 42 vollflächig in Form eines Pfeils aufgebracht ist. Die Untergrundschicht 42 ist in einer dunklen Buntfarbe, beispielsweise einer dunkelvioletten Buntfarbe, gehalten und kann beispielsweise im Offsetdruck aufgebracht sein.

Auf diese Untergrundschicht 42 ist im Siebdruck eine erste Effektschicht 44 in Form eines ebenfalls vollflächigen Pfeils aufgebracht, der zum Ausgleich eventueller Passerschwankungen etwas kleiner als der Pfeil der Untergrundschicht 42 ausgeführt ist. Für die erste Effektschicht wurde dabei eine Farbformulierung verwendet, die
- 55 Teile radikalisch härtendes UV-Bindemittel,
- 35 Teile Mikrokapseln 46 mit einem selbst nicht dargestellten, reversibel magnetisch ausrichtbaren Pigment,
- 5 Teile Photoinitiatormischung,
- 3 Teile UV-härtendes, haftungsvermittelndes Additiv und
- 2 Teile Entschäumer
enthält. Durch die Verwendung eines solchen 100 %-UV-Systems sind die Mikrokapseln 46 optimal in die erste Effektschicht 44 eingebettet.

Auf die erste Effektschicht 44 ist im Siebdruck eine zweite Effektschicht 48 in Form eines Pfeils mit Aussparungen aufgebracht, dessen Größe zwischen den beiden zuvor aufgebrachten Pfeilgrößen liegt. In den Aussparungen der zweiten Effektschicht 48 ist die erste Effektschicht 44 sichtbar. Für die zweite Effektschicht 48 wurde eine Farbformulierung verwendet, die
- 70 Teile UV-vernetzbares, kationisch härtendes Bindemittel,
- 17 Teile Interferenzpigment 50,
- 5 Teile Lösemittel,
- 6 Teile Photoinitiatormischung und
- 2 Teile Entschäumer
aufweist. Über die gesamte Anordnung von Untergrundschicht 42, erster Effektschicht 44 und zweiter Effektschicht 48 ist im Flexodruck eine UV-Lackschicht 52 als Schutzschicht der oben beschriebenen Art aufgebracht. Die Schutzschicht ist vollflächig ebenfalls in Form eines Pfeils aufgebracht, dessen Fläche die Fläche aller zuvor aufgebrachten Schichten überdeckt.

Bei einer Abwandlung der Gestaltung der Fig. 3 wurde für die zweite Effektschicht 48 eine Farbformulierung verwendet, die
- 70 Teile UV-vernetzbares, wässriges Dispersionsbindemittel,
- 20 Teile spezielles Effektpigment 50,
- 6 Teile Photoinitiatormischung und
- 4 Teile Entschäumer
aufweist.

Die optisch variablen Interferenzpigmente 50 bzw. speziellen Effektpigmente 50 des Ausführungsbeispiels der Fig. 3 weisen einen Farbkippeffekt mit einem attraktiven Farbwechsel von Grün bei senkrechter Betrachtung zu Blau bei schräger Betrachtung auf. Durch geeignete Abwandlung der Rezepturen lassen sich selbstverständlich auch andere Farbeffekte des in Fig. 3 gezeigten Sicherheitselements realisieren.

Der blauviolette Farbeindruck bei schrägem Betrachtungswinkel wird durch den violetten Untergrunddruck 42 verstärkt. Da die zweite Effektschicht 48 in beiden Varianten zudem nicht mit einem 100 %-UV-System gedruckt wurde, ergibt sich eine ohnehin starke Ausrichtung der optisch variablen Effektpigmente 50 und damit ein deutlicher Farbflop.

Neben dem optisch variablen Effekt weist das Sicherheitselement 40 aufgrund der reversibel magnetisch ausrichtbaren Pigmente in den Mikrokapseln 46 ein interaktiv auslösbares magnetisches Echtheitskennzeichen auf. Wird das Sicherheitselement 40 durch den Benutzer unmittelbar über einen Magneten, beispielsweise einen in Motivform ausgebildeten Permanentmagneten, gebracht, so verändert sich das visuelle Erscheinungsbild des Sicherheitselements 40 im Bereich über dem Magneten interaktiv mit einem dreidimensional anmutenden Erscheinungsbild. Das konkret sichtbare Bild ergibt sich jeweils durch die lokal unterschiedliche Ausrichtung der Pigmente in den Mikrokapseln 46 im räumlich variierenden Feld des Permanentmagneten und kann durch den Benutzer durch eine Bewegung des Sicherheitselements oder des Magneten interaktiv verändert werden.

Die Effektpigmente 50 der zweiten Effektschicht sind mit Vorteil nichtmagnetische, optisch variable Effektpigmente, die durch auf der Basis von cholesterischen flüssigkristallinen Polymeren hergestellte Pigmente gebildet sind. Alternativ können die Effektpigmente 50 durch Perlglanzpigmente oder Interferenzschichtpigmente gebildet sein, beispielsweise durch die oben bereits genannten Iriodine, durch die mehrschichtigen Interferenzschichtpigmente oder durch die magnetischen Interferenzschichtpigmente oder durch andere der oben allgemein beschriebenen Effektpigmente.

Fig. 4 zeigt ein weiteres Sicherheitselement 60 nach einem Ausführungsbeispiel der Erfindung im Querschnitt. Die Form des Sicherheitselements 60 in Aufsicht kann, muss aber nicht der in Fig. 3(a) gezeigten Form entsprechen.

Das Sicherheitselement 60 der Fig. 4 enthält ein Substrat 20, auf dem eine Untergrundschicht 62 aufgebracht ist, die neben Teilflächen 64 mit einer dunklen Buntfarbe, beispielsweise einer dunkelvioletten Buntfarbe, auch schwarze Teilflächen 66 aufweist. Auf diese Untergrundschicht 62 ist im Siebdruck eine erste Effektschicht 44 mit Mikrokapseln 46 der im Zusammenhang mit Fig. 3 bereits beschriebenen Art aufgebracht.

Auf die erste Effektschicht 44 ist im Siebdruck eine zweite Effektschicht 68 aufgebracht, für die eine Farbformulierung verwendet wurde, die
- 50 Teile radikalisch härtendes UV-Bindemittel,
- 20 Teile Mikrokapseln 46 mit einem reversibel magnetisch ausrichtbaren Pigment,
- 20 Teile spezielles Effektpigment 50,
- 5 Teile Photoinitiatormischung und
- 5 Teile UV-härtendes, haftungsvermittelndes Additiv
enthält. Über die gesamte Anordnung von Untergrundschicht 42, erster Effektschicht 44 und zweiter Effektschicht 68 wurde wieder im Flexodruck eine UV-Lackschicht 52 als Schutzschicht aufgebracht.

Im Unterschied zum Ausführungsbeispiel der Fig. 3 enthalten bei Fig. 4 beide Effektschichten 44, 68 Mikrokapseln 46 mit reversibel magnetisch ausrichtbaren Pigmenten. Bei der Verifikation im externen Magnetfeld ist das dreidimensional anmutende Erscheinungsbild, das durch die lokal magnetisch ausgerichteten Pigmente in den Mikrokapseln 46 erzeugt wird, daher klarer und brillanter. Diesem Zweck dienen auch die schwarzen Teilbereiche 66 der Untergrundschicht, über denen der optische Effekt der magnetisch ausgerichteten Pigmente noch stärker hervortritt als in den Teilbereichen 64 mit dunkler Buntfarbe.

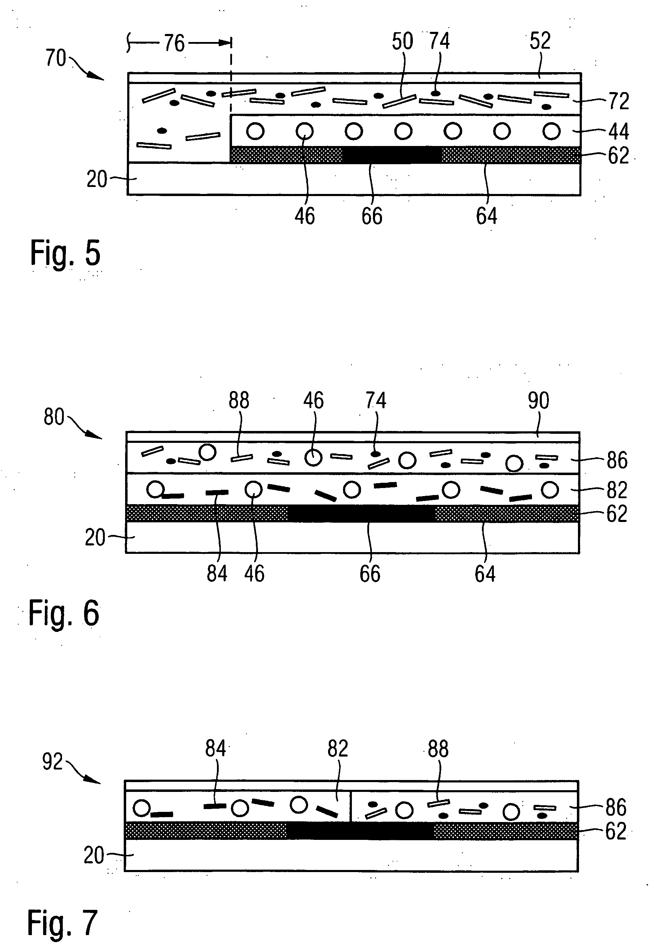

Das Sicherheitselement 70 des Ausführungsbeispiels der Fig. 5 unterscheidet sich von dem Ausführungsbeispiel der Fig. 3 insbesondere darin, dass die zweite Effektschicht neben den optisch variablen Effektpigmenten 50 auch blaue Buntpigmente 74 enthält. Das Sicherheitselement 70 enthält ein Substrat 20, auf dem, wie bei Fig. 4, eine Untergrundschicht 62 mit Teilflächen 64 mit dunkler Buntfarbe und mit schwarzen Teilflächen 66 aufgebracht ist. Auf die Untergrundschicht 62 ist im Siebdruck eine erste Effektschicht 44 mit Mikrokapseln 46 der bereits im Zusammenhang mit Fig. 3 beschriebenen Art aufbracht.

Auf die erste Effektschicht 44 ist dann im Siebdruck eine zweite Effektschicht 72 aufgebracht, wobei folgende Farbformulierungen verwendet wurden:
1. Effektschicht:
   - 55 Teile UV-Bindemittel (radikalisch härtend),
   - 35 Teile Mikrokapseln mit einem reversibel magnetisch ausrichtbarem Pigment,
   - 5 Teile Photoinitiatormischung,
   - 3 Teile vernetzendes, haftungvermittelndes Additiv und
   - 2 Teile Entschäumer.
2. Effektschicht:
   - 75 Teile UV-Bindemittel (radikalisch härtend),
   - 15 Teile spezielles Effektpigment,
   - 6 Teile Photoinitiatormischung,
   - 3 Teile vernetzendes, haftungsvermittlendes Additiv und
   - 1 Teil lasierendes Blaupigment.

Über die gesamte Anordnung von Untergrundschicht 42, erster Effektschicht 44 und zweiter Effektschicht 72 wurde wieder im Flexodruck eine UV-Lackschicht 52 als Schutzschicht aufgebracht.

Das Vorsehen der Buntpigmente 74 in der zweiten Effektschicht 72 erhöht den Wiedererkennungswert und damit die Fälschungssicherheit des Sicherheitselements 70. Insbesondere ist der Farbwechsel der optisch variablen Effektpigmente 50 durch das zusätzliche Buntpigment visuell noch ansprechender, da andere Farbwechsel und klarere Farben erzeugt werden können.

Die zweite Effektschicht 2 kann in dieser Variante auch Bereiche 76 außerhalb der ersten Effektschicht 44 und außerhalb der Untergrundschicht 62 überdrucken, so dass das beigefügte Buntpigment 74 ermöglicht, auch diesen Bereich gestalterisch zu nutzen.

Fig. 6 zeigt ein weiteres Sicherheitselement 80 nach einem Ausführungsbeispiel der Erfindung im Querschnitt. Das Sicherheitselement 80 enthält ein Substrat 20, auf dem eine Untergrundschicht 62 mit Teilflächen 64 mit dunkler Buntfarbe und mit schwarzen Teilflächen 66 aufgebracht ist.

Auf die Untergrundschicht 62 ist im Siebdruck eine erste Effektschicht 82 aufgebracht, für die eine Farbformulierung verwendet wurde, die
- 45 Teile radikalisch härtendes UV-Bindemittel,
- 30 Teile Mikrokapseln 46 mit einem reversibel magnetisch ausrichtbaren Pigment,
- 15 Teile rechtszirkular polarisierende Flüssigkristallpigmente 84 mit einem Farbflop von Rot bei senkrechter Betrachtung zu Grün bei schräger Betrachtung,
- 5 Teile Photoinitiatormischung,
- 3 Teile UV-härtendes, haftungsvermittelndes Additiv und
- 2 Teile Entschäumer
enthält.

Auf die erste Effektschicht 82 ist im Siebdruck eine zweite Effektschicht 86 aufgebracht, für die eine Farbformulierung verwendet wurde, die
- 44 Teile radikalisch härtendes UV-Bindemittel,
- 30 Teile Mikrokapseln 46 mit einem reversibel magnetisch ausrichtbaren Pigment,
- 15 Teile linkszirkular polarisierende Flüssigkristallpigmente 88 mit einem Farbflop von Grün bei senkrechter Betrachtung zu Blau bei schräger Betrachtung,
- 5 Teile Photoinitiatormischung,
- 3 Teile UV-härtendes, haftungsvermittelndes Additiv,
- 2 Teile Entschäumer und
- 1 Teil lasierendes Blaupigment
enthält.

Über die gesamte Anordnung von Untergrundschicht 42, erster Effektschicht 82 und zweiter Effektschicht 86 wurde im Flexodruck eine mattierende bzw. kaschierende UV-Lackschicht 90 als Schutzschicht aufgebracht.

Die erste und zweite Effektschicht 82, 86 sind dabei im Ausführungsbeispiel deckungsgleich übereinander aufbracht. Die beiden unterschiedlichen Farbflops der beiden Effektschichten bilden eine versteckte Information in dem Sicherheitselement 80, die mit Zirkularpolarisatoren sichtbar gemacht werden kann. Beispielsweise ist bei Betrachtung des Sicherheitselements 80 mit einem Zirkularpolarisator, der nur rechtszirkular polarisiertes Licht transmittiert, nur der Farbflop der ersten Effektschicht 82 (Rot zu Grün) sichtbar, während bei Betrachtung mit einem Zirkularpolarisator, der nur linkszirkular polarisiertes Licht transmittiert, nur der Farbflop der zweiten Effektschicht 86 (Grün zu Blau) sichtbar ist. Im unpolarisierten Licht überlagern sich die beiden Farbkippeffekte zu einer weitgehend einheitlichen Farbe.

Eine Abwandlung der Ausgestaltung der Fig. 6 ist in Fig. 7 gezeigt. Im Unterschied zur Ausgestaltung der Fig. 6 sind die beiden Effektschichten 82, 86 des Sicherheitselements 92 der Fig. 7 nicht übereinander, sondern passergenau nebeneinander angeordnet. Aufgrund der unterschiedlichen zirkularen Polarisation und des unterschiedlichen Farbflops der Flüssigkristallpigmente 84 und 88 bildet die Anordnung der beiden Effektschichten 82, 86 eine zusätzliche Information in dem Sicherheitselement 92, die beispielsweise mit einem Zirkularpolarisator sichtbar gemacht werden kann. In einer nicht weiter dargestellten Abwandlung der Fig. 6 und Fig. 7 sind sowohl in der ersten als auch in der zweiten Effektschicht gleiche oder aber verschiedene Buntpigmente vorgesehen bzw. in der ersten und zweiten Effektschicht keine Buntpigmente vorgesehen.

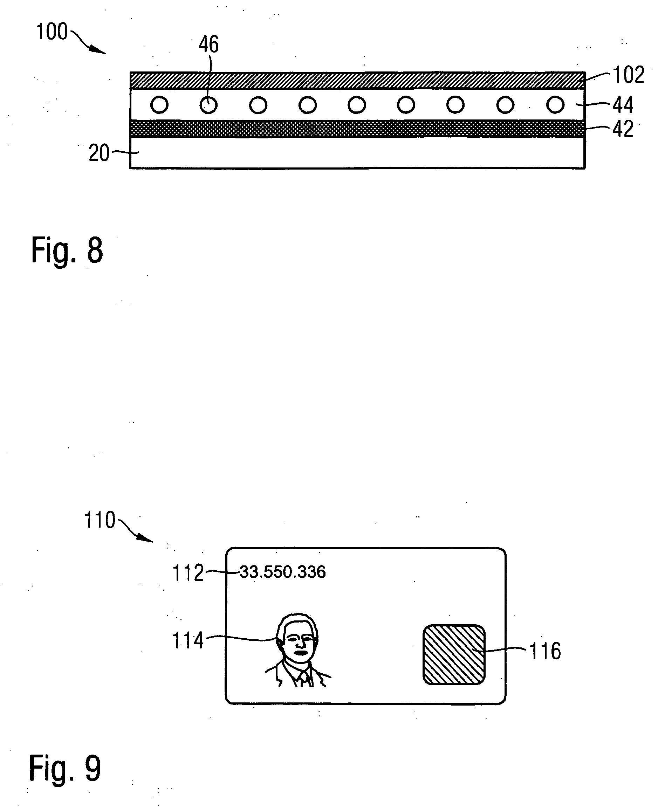

Eine weitere Erfindungsvariante ist in Fig. 8 illustriert. Das Sicherheitselement 100 der Fig. 8 enthält zunächst wie das Sicherheitselement 40 der Fig. 3 ein Substrat 20, auf dem eine Untergrundschicht 42 in einer dunklen Buntfarbe, beispielsweise einer dunkelvioletten Buntfarbe, aufgebracht ist. Auf die Untergrundschicht 42 ist im Siebdruck eine erste Effektschicht 44 aufgebracht, für die eine Farbformulierung mit Mikrokapseln 46, wie bei Fig. 3 angegeben, verwendet wurde.

Im Unterschied zur Gestaltung der Fig. 3 wurde dann allerdings eine zweite Effektschicht 102 aufgebracht, die keine vorher erzeugten Effektpigmente enthält, sondern die eine Schicht aus vernetzbaren Flüssigkristallen aufweist, die radikalisch durch Einwirkung von UV-Strahlung vernetzt werden können. Auf diese Weise entsteht nach der UV-Bestrahlung eine großflächige optisch variable Flüssigkristallschicht als zweite Effektschicht 102. Neben einem visuell ansprechenden Farbflop zeigt die zweite Effektschicht 102 ein selektives Reflexionsverhalten, bei dem das reflektierte Licht eine charakteristische Zirkularpolarisation aufweist.

Die in Fig. 8 gezeigte Variante bietet den Vorteil, dass die zweite Effektschicht 102 nicht im Siebdruckverfahren aufgebracht werden muss, sondern dass auch andere Druckverfahren mit höherer Auflösung, wie etwa Letterset, Offsetdruck oder Buchdruck, eingesetzt werden können. Auch kann bei dieser Variante jedenfalls bei einer Übereinanderanordnung der beiden Effektschichten unter Umständen auf eine separate Schutzschicht verzichtet werden, wenn nämlich die zweite Effektschicht selbst keine schutzbedürftigen Pigmente enthält und sie ihrerseits die darunterliegende erste Effektschicht schützend abdeckt.

Die Erfindung kann auch bei Karten vorteilhaft eingesetzt werden, wie anhand des Ausführungsbeispiels der Fig. 9 illustriert. Fig. 9 zeigt eine Aufsicht auf eine Identifikationskarte 110, wie etwa eine Ausweiskarte, Bankkarte, Kreditkarte oder einen Führerschein. Die Identifikationskarte 110 enthält neben herkömmlichen Kennzeichnungen, wie etwa einer Seriennummer 112 oder einem Portrait 114 des Karteninhabers, ein Sicherheitselement 116 mit einem interaktiv auslösbaren Echtheitskennzeichen der oben beschriebenen Art. Das Sicherheitselement 116 zeigt einerseits einen Farbkippeffekt und enthält andererseits ein reversibles und durch eine magnetische Verifikationseinrichtung interaktiv auslösbares Echtheitskennzeichen.

### Bezugszeichenliste

- 10: Banknote
- 12: Transferelement
- 20: Substrat
- 22: Untergrundschicht
- 24: Farbschichtaufbau
- 26: erste Effektschicht
- 28: zweite Effektschicht
- 30: nicht überdeckte Randbereiche
- 32: Aussparungen
- 34: Schutzschicht
- 40: Sicherheitselement
- 42: Untergrundschicht
- 44: erste Effektschicht
- 46: Mikrokapseln
- 48: zweite Effektschicht
- 50: optisch variablen Pigmente
- 52: UV-Lackschicht
- 60: Sicherheitselement
- 62: Untergrundschicht
- 64,66: Teilflächen
- 68: zweite Effektschicht
- 70: Sicherheitselement
- 72: zweite Effektschicht
- 74: Buntpigmente
- 76: Bereiche außerhalb der ersten Effektschicht
- 80: Sicherheitselement
- 82: erste Effektschicht
- 84: rechtszirkular polarisierende Flüssigkristallpigmente
- 86: zweite Effektschicht
- 88: linkszirkular polarisierende Flüssigkristallpigmente
- 90: mattierende UV-Lackschicht
- 92: Sicherheitselement
- 100: Sicherheitselement
- 102: zweite Effektschicht
- 110: Identifikationskarte
- 112: Seriennummer
- 114: Portrait
- 116: Sicherheitselement

## Patentansprüche

1. Optisch variables Sicherheitselement (12,40) zur Absicherung von Wertgegenständen (10), mit einem Substrat (20), einer auf dem Substrat angeordneten dunklen Untergrundschicht (22,42) und einem über der Untergrundschicht angeordneten optisch variablen Farbschichtaufbau (24), der eine erste Effektschicht (26,44) und eine zweite Effektschicht (28,48) umfasst, wobei die erste Effektschicht auf der Untergrundschicht angeordnet ist und durch ein äußeres Magnetfeld reversibel ausrichtbare Effektpigmente enthält, und wobei die zweite Effektschicht eine optisch variable Schicht darstellt, die auf und/ oder neben der ersten Effektschicht angeordnet ist **dadurch gekennzeichnet, dass** die zweite Effektschicht auch durch ein äußeres Magnetfeld reversibel ausrichtbare Effektpigmente enthält, die den optischen Effekt der reversibel ausrichtbaren Effektpigmente der ersten Effektschicht verstärken.

2. Sicherheitselement nach Anspruch 1, **dadurch gekennzeichnet, dass** die reversibel ausrichtbaren Effektpigmente in einer Mikrokapsel verkapselt sind und in der Mikrokapsel im Wesentlichen frei drehbar sind.

3. Sicherheitselement nach Anspruch 1 oder 2, **dadurch gekennzeichnet, dass** die zweite Effektschicht über der ersten Effektschicht angeordnet ist und vorzugsweise zwischen 10 % und 100 %, besonders bevorzugt zwischen 40 % und 70 % der Fläche der ersten Effektschicht überdeckt.

4. Sicherheitselement nach Anspruch 1 oder 2, **dadurch gekennzeichnet, dass** die zweite Effektschicht neben, vorzugsweise passergenau neben der ersten Effektschicht angeordnet ist.

5. Sicherheitselement nach wenigstens einem der Ansprüche 1 bis 4, **dadurch gekennzeichnet, dass** die Untergrundschicht zumindest eine dunkle Buntfarbe enthält, vorzugsweise, dass die Untergrundschicht einen im CIELAB-Farbraum angegebenen L*-Wert kleiner 60 aufweist.

6. Sicherheitselement nach Anspruch 5, **dadurch gekennzeichnet, dass** die Untergrundschicht Teilflächen mit der dunklen Buntfarbe und schwarze Teilflächen enthält.

7. Sicherheitselement nach Anspruch 5 oder 6, **dadurch gekennzeichnet, dass** die zweite Effektschicht als optisch variablen Effekt einen Farbkippeffekt zeigt, und dass die Untergrundschicht eine dunkle Buntfarbe enthält, die den Farbkippeffekt der zweiten Effektschicht verstärkt.

8. Sicherheitselement nach wenigstens einem der Ansprüche 1 bis 7, **dadurch gekennzeichnet, dass** die zweite Effektschicht anisotrope, optisch variable Effektpigmente enthält, die vorzugsweise nicht-magnetisch und/ oder transparent oder transluzent sind, und die insbesondere Flüssigkristallpigmente, Perlglanzpigmente oder Interferenzschichtpigmente sind.

9. Sicherheitselement nach wenigstens einem der Ansprüche 1 bis 8, **dadurch gekennzeichnet, dass** die die zweite Effektschicht durch eine optisch variable Schicht aus vernetzten Flüssigkristallen gebildet ist.

10. Sicherheitselement nach wenigstens einem der Ansprüche 1 bis 9, **dadurch gekennzeichnet, dass** die zweite Effektschicht auch Buntpigmente enthält, die den optisch variablen Effekt der zweiten Effektschicht, insbesondere einen Farbkippeffekt von in der zweiten Effektschicht vorgesehenen Effektpigmenten verstärken.

11. Sicherheitselement nach Anspruch 10, **dadurch gekennzeichnet, dass** die zweite Effektschicht auch in Bereichen außerhalb der ersten Effektschicht und/ oder in Bereichen der Untergrundschicht und/ oder außerhalb der Untergrundschicht vorgesehen ist.

12. Sicherheitselement nach wenigstens einem der Ansprüche 1 bis 11, **dadurch gekennzeichnet, dass** die reversibel ausrichtbaren Effektpigmente der ersten Effektschicht in einem UV-gehärteten Bindemittel mit hohem Festkörperanteil von mehr als 90 % vorliegen.

13. Sicherheitselement nach wenigstens einem der Ansprüche 1 bis 12, **dadurch gekennzeichnet, dass** die erste Effektschicht neben den reversibel ausrichtbaren Effektpigmenten auch anisotrope, optisch variable Effektpigmente enthält, die vorzugsweise nicht-magnetisch und/ oder transparent oder transluzent sind, und die insbesondere Flüssigkristallpigmente, Perlglanzpigmente oder Interferenzschichtpigmente sind.

14. Sicherheitselement nach Anspruch 13, **dadurch gekennzeichnet, dass** die erste und zweite Effektschicht unterschiedliche optisch variable Effektpigmente enthalten, insbesondere dass die erste und zweite Effektschicht zirkular polarisierende Effektpigmente mit gegenläufiger zirkularer Polarisation enthalten.

15. Verfahren zum Herstellen eines optisch variablen Sicherheitselements zur Absicherung von Wertgegenständen, bei dem auf einem Substrat eine dunkle Untergrundschicht angeordnet wird und über der Untergrundschicht ein optisch variabler Farbschichtaufbau angeordnet wird, der eine erste Effektschicht und eine zweite Effektschicht umfasst, wobei die erste Effektschicht auf der Untergrundschicht angeordnet wird und durch ein äußeres Magnetfeld reversibel ausrichtbare Effektpigmente enthält, und dass die zweite Effektschicht eine optisch variable Schicht darstellt, die auf und/ oder neben der ersten Effektschicht angeordnet wird, **dadurch gekennzeichnet, dass** die zweite Effektschicht auch durch ein äußeres Magnetfeld reversibel ausrichtbare Effektpigmente enthält, die den optischen Effekt der reversibel ausrichtbaren Effektpigmente der ersten Effektschicht verstärken.

16. Sicherheitsanordnung zur Absicherung von Sicherheitspapieren, Wertdokumenten, Datenträgern und dergleichen mit einem Sicherheitselement nach einem der Ansprüche 1 bis 14 und mit einem Verifikationselement mit einem Magnetbereich, wobei vorzugsweise in dem Magnetbereich magnetisches Material in Form von Mustern, Linien, Zeichen oder einer Codierung vorliegt.

17. Sicherheitsanordnung nach Anspruch 16, **dadurch gekennzeichnet, dass** der Magnetbereich durch einen Permanentmagneten eines tragbaren oder stationären Geräts, insbesondere eines Mobiltelefons, eines tragbaren Computers, eines tragbaren Audio- und/oder Videoabspielgeräts oder eines Warensicherungssystems, gebildet ist.

18. Datenträger mit einem Sicherheitselement nach einem der Ansprüche 1 bis 14 oder mit einer Sicherheitsanordnung nach einem der Ansprüche 16 oder 17, wobei das Sicherheitselement und das Verifikationselement der Sicherheitsanordnung bevorzugt geometrisch so auf dem Datenträger angeordnet sind, dass das Sicherheitselement durch Biegen, Klappen oder Falten des Datenträgers über das Verifikationselement bringbar ist.

## Claims

1. An optically variable security element (12, 40) for securing value objects (10), with a substrate (20), a dark background layer (22, 42) arranged on the substrate and an optically variable ink-layer structure (24) arranged above the background layer, said ink-layer structure comprising a first effect layer (26, 44) and a second effect layer (28, 48), wherein the first effect layer is arranged on the background layer and contains effect pigments that are reversibly orientable by an external magnetic field, and wherein the second effect layer represents an optically variable layer which is arranged on and/or next to the first effect layer, **characterized in that** the second effect layer contains effect pigments that are also reversibly orientable by an external magnetic field, said effect pigments enhancing the optical effect of the reversibly orientable effect pigments of the first effect layer.

2. The security element according to claim 1, **characterized in that** the reversibly orientable effect pigments are encapsulated in a microcapsule and are substantially freely rotatable in the microcapsule.

3. The security element according to claim 1 or 2, **characterized in that** the second effect layer is arranged above the first effect layer and covers preferably between 10% and 100%, particularly preferably between 40% and 70%, of the area of the first effect layer.

4. The security element according to claim 1 or 2, **characterized in that** the second effect layer is arranged next to, preferably in exact register next to, the first effect layer.

5. The security element according to any of the claims 1 to 4, **characterized in that** the background layer contains at least one dark color ink, preferably that the background layer has an L* value specified in the CIELAB color space that is smaller than 60.

6. The security element according to claim 5, **characterized in that** the background layer contains partial areas with the dark color ink and black partial areas.

7. The security element according to claim 5 or 6, **characterized in that** the second effect layer shows a color-shift effect as optically variable effect, and that the background layer contains a dark color ink that enhances the color-shift effect of the second effect layer.

8. The security element according to at least one of the claims 1 to 7, **characterized in that** the second effect layer contains anisotropic, optically variable effect pigments which are preferably non-magnetic and/or transparent or translucent, and which are in particular liquid crystal pigments, pearl luster pigments or interference layer pigments.

9. The security element according to at least one of the claims 1 to 8, **characterized in that** the second effect layer is formed by an optically variable layer of cross-linked liquid crystals.

10. The security element according to at least one of the claims 1 to 9, **characterized in that** the second effect layer also contains color pigments which enhance the optically variable effect of the second effect layer, in particular a color-shift effect of effect pigments provided in the second effect layer.

11. The security element according to claim 10, **characterized in that** the second effect layer is provided also in regions outside of the first effect layer and/or in regions of the background layer and/or outside of the background layer.

12. The security element according to at least one of the claims 1 to 11, **characterized in that** the reversibly orientable effect pigments of the first effect layer are present in a UV-cured binding agent with a high proportion of solid bodies of more than 90%.

13. The security element according to at least one of the claims 1 to 12, **characterized in that,** in addition to the reversibly orientable effect pigments, the first effect layer also contains anisotropic, optically variable effect pigments which are preferably non-magnetic and/or transparent or translucent, and which are the particular liquid crystal pigments, pearl luster pigments or interference layer pigments.

14. The security element according to claim 13, **characterized in that** the first and second effect layers contain different optically variable effect pigments, in particular that the first and second effect layers contain circularly polarizing effect pigments with counter-directional circular polarization.

15. A method for manufacturing an optically variable security element for securing value objects, wherein on a substrate a dark background layer is arranged and above the background layer an optically variable ink-layer structure is arranged which comprises a first effect layer and a second effect layer, wherein the first effect layer is arranged on the background layer and contains effect pigments that are reversibly orientable by an external magnetic field, and that the second effect layer represents an optically variable layer that is arranged on and/or next to the first effect layer, **characterized in that** the second effect layer contains effect pigments that are also reversibly orientable by an external magnetic field, said effect pigments enhancing the optical effect of the reversibly orientable effect pigments of the first effect layer.

16. A security arrangement for securing security papers, value documents, data carriers and the like, with a security element according to any of the claims 1 to 14 and with a verification element with a magnetic region, wherein magnetic material is preferably present in the form of patterns, lines, characters or a coding in the magnetic region.

17. The security arrangement according to claim 16, **characterized in that** the magnetic region is formed by a permanent magnet of a portable or stationary device, in particular of a mobile phone, a portable computer, a portable audio and/or video player or a system for securing goods.

18. A data carrier with a security element according to any of the claims 1 to 14 or with a security arrangement according to any of the claims 16 or 17, wherein the security element and the verification element of the security arrangement are preferably arranged geometrically on the data carrier such that the security element can be brought over the verification element by bending, plying or folding the data carrier.

## Revendications

1. Élément de sécurité (12, 40) optiquement variable destiné à la protection d'objets de valeur (10), comprenant un substrat (20), une couche de fond (22, 42) foncée agencée sur le substrat, et une structure en couches d'encre (24) optiquement variable qui est agencée au-dessus de la couche de fond et qui comprend une première couche à effets (26, 44) et une deuxième couche à effets (28, 48), la première couche à effets étant agencée sur la couche de fond et contenant des pigments à effets orientables de manière réversible par un champ magnétique externe, et la deuxième couche à effets représentant une couche optiquement variable qui est agencée sur et/ou à côté de la première couche à effets, **caractérisé en ce que** la deuxième couche à effets contient aussi des pigments à effets orientables de manière réversible par un champ magnétique externe, lesquels renforcent l'effet optique des pigments à effets orientables de manière réversible de la première couche à effets.

2. Élément de sécurité selon la revendication 1, **caractérisé en ce que** les pigments à effets orientables de manière réversible sont encapsulés dans une microcapsule et peuvent tourner sensiblement librement dans la microcapsule.

3. Élément de sécurité selon la revendication 1 ou 2, **caractérisé en ce que** la deuxième couche à effets est agencée au-dessus de la première couche à effets et recouvre de préférence entre 10 % et 100 %, particulièrement e de préférence entre 40 % et 70 % de la surface de la première couche à effets.

4. Élément de sécurité selon la revendication 1 ou 2, **caractérisé en ce que** la deuxième couche à effets est agencée à côté, de préférence en repérage à côté de la première couche à effets.

5. Élément de sécurité selon au moins une des revendications de 1 à 4, **caractérisé en ce que** la couche de fond contient au moins une couleur foncée, de préférence **en ce que** la couche de fond présente une valeur L*qui, dans l'espace colorimétrique CIELAB, figure comme étant inférieure à 60.

6. Élément de sécurité selon la revendication 5, **caractérisé en ce que** la couche de fond comporte des surfaces partielles ayant la couleur foncée et des surfaces partielles noires.

7. Élément de sécurité selon la revendication 5 ou 6, **caractérisé en ce que** la deuxième couche à effets présente, en tant qu'effet optiquement variable, un effet de changement des couleurs par basculement, et **en ce que** la couche de fond contient une couleur foncée qui renforce l'effet de changement des couleurs par basculement de la deuxième couche à effets.

8. Élément de sécurité selon au moins une des revendications de 1 à 7, **caractérisé en ce que** la deuxième couche à effets contient des pigments à effets optiquement variables qui sont de préférence non magnétiques et/ou transparents ou translucides et qui sont en particulier des pigments cristaux liquides, des pigments nacrés ou des pigments de couche d'interférence.

9. Élément de sécurité selon au moins une des revendications de 1 à 8, **caractérisé en ce que** la deuxième couche à effets est constituée par une couche optiquement variable en cristaux liquides réticulés.

10. Élément de sécurité selon au moins une des revendications de 1 à 9, **caractérisé en ce que** la deuxième couche à effets contient aussi des pigments colorés qui renforcent l'effet optiquement variable de la deuxième couche à effets, en particulier un effet de changement des couleurs par basculement de pigments à effets prévus dans la deuxième couche à effets.

11. Élément de sécurité selon la revendication 10 **caractérisé en ce que** la deuxième couche à effets est aussi prévue dans des zones situées à l'extérieur de la première couche à effets et/ou dans des zones de la couche de fond et/ou à l'extérieur de la couche de fond.

12. Élément de sécurité selon au moins une des revendications de 1 à 11, **caractérisé en ce que** les pigments à effets de la première couche à effets orientables de manière réversible se trouvent dans un liant durci aux UV à part élevée de matière solide supérieure à 90 %.

13. Élément de sécurité selon au moins une des revendications de 1 à 12, **caractérisé en ce que** la première couche à effets contient, en plus des pigments à effets orientables de manière réversible, aussi des pigments à effets optiquement variables anisotropes qui sont de préférence non magnétiques et/ou transparents ou translucides et qui sont en particulier des pigments cristaux liquides, des pigments nacrés ou des pigments de couche d'interférence.

14. Élément de sécurité selon la revendication 13, **caractérisé en ce que** la première et deuxième couche à effets contiennent différents pigments à effets optiquement variables, en particulier que la première et deuxième couche à effets contiennent des pigments à effets polarisés circulairement à polarisation circulaire opposée.

15. Procédé de fabrication d'un élément de sécurité optiquement variable destiné à la protection d'objets de valeur (10), dans lequel, sur un substrat, une couche de fond foncée est agencée, et dans lequel, sur la couche de fond, une structure en couches d'encre optiquement variable est agencée, laquelle comprend une première couche à effets et une deuxième couche à effets, la première couche à effets étant agencée sur la couche de fond et contenant des pigments à effets orientables de manière réversible par un champ magnétique externe, et la deuxième couche à effets représentant une couche optiquement variable qui est agencée sur et/ou à côté de la première couche à effets, **caractérisé en ce que** la deuxième couche à effets contient aussi des pigments à effets orientables de manière réversible par un champ magnétique externe, lesquels renforcent l'effet optique des pigments à effets orientables de manière réversible de la première couche à effets.

16. Agencement de sécurité destiné à la protection de papiers de sécurité, de documents de valeur, de supports de données et d'objets similaires, comprenant un élément de sécurité selon une des revendications de 1 à 14 et un élément de vérification comportant une zone magnétique, cependant que, dans la zone magnétique, il y a du matériau magnétique sous forme de motifs, de lignes, de caractères ou d'une codification.

17. Agencement de sécurité selon la revendication 16, **caractérisé en ce que** la zone magnétique est constituée par un aimant permanent d'un appareil portable ou fixe, en particulier d'un téléphone mobile, d'un ordinateur portable, d'un appareil de lecture audio ou vidéo ou d'un système de protection de marchandises.

18. Support de données comprenant un élément de sécurité selon une des revendications de 1 à 14 ou un agencement de sécurité selon une des revendications 16 ou 17, l'élément de sécurité ou l'élément de vérification de l'agencement de sécurité étant de préférence agencé géométriquement de telle façon sur le support de données que l'élément de sécurité peut être placé sur l'élément de vérification par courbage, rabattement ou pliage du support de données.
